# EUROPÄISCHE PATENTSCHRIFT

(11) **EP 3 500 799 B1**
(45) Veröffentlichungstag und Bekanntmachung des Hinweises auf die Patenterteilung: **01.04.2026**
(21) Anmeldenummer: 17746126.6
(22) Anmeldetag: 01.08.2017
(51) Int. Cl.: F24C 15/20, H05B 6/64

(54) **ENTFEUCHTEN EINES GARRAUMS**
DEHUMIDIFYING A COOKING CHAMBER
DÉSHUMIDIFICATION D'UNE CHAMBRE DE CUISSON

(30) Priorität: 19.08.2016 DE 102016215647
(43) Veröffentlichungstag der Anmeldung: 26.06.2019
(73) Patentinhaber: BSH Hausgeräte GmbH, 81739 München (DE)
(72) Erfinder: STIEF, Max, 83569 Vogtareuth (DE); GUGGENBERGER, Peter, 83093 Bad Endorf (DE); KUCHLER, Markus, 83257 Gstadt am Chiemsee (DE)
(86) Internationale Anmeldenummer: PCT/EP2017/069458
(87) Internationale Veröffentlichungsnummer: WO 2018/033385

(56) Entgegenhaltungen:
- EP-A2- 0 567 813
- DE-A1- 10 213 014
- DE-A1- 10 338 138
- JP-A- 2000 274 693
- US-A1- 2015 059 595

## Beschreibung

Die Erfindung betrifft ein Verfahren zum Entfeuchten eines Garraums eines Haushaltsgargeräts, bei dem eine Kondensatbildung in einem Garraum des Haushaltsgargeräts ermittelt wird. Die Erfindung betrifft auch ein Haushaltsgargerät, aufweisend einen Garraum, eine Mikrowelleneinrichtung zum Beaufschlagen des Garraums mit Mikrowellen, mindestens eine Widerstandsheizung zur Abgabe von Wärmestrahlung in den Garraum und eine Anzeigeeinrichtung zum Anzeigen von Informationen, wobei das Haushaltsgargerät dazu eingerichtet ist, eine Kondensatbildung in dem Garraum zu ermitteln und einen Entfeuchtungsablauf zu starten. Die Erfindung ist insbesondere vorteilhaft anwendbar auf Mikrowellen-Gargeräte, insbesondere auf Mikrowellen-Gargeräte mit einer Zusatzheizung.

Bei Mikrowellen-Gargeräten wird durch einen Mikrowellenbetrieb praktisch nur das Gargut erhitzt, nicht jedoch das Geräteinnere oder Anbauteile im Inneren. Erhitztes Gargut gibt häufig Wasserdampf ab, der an kalten Stellen im Geräteinneren (beispielsweise an einer Wandung ("Muffel") des zugehörigen Garraums und ggf. an Anbauteilen) kondensiert. Das Kondensat kann durch eine normale Geräteentlüftung meist nicht mehr entfernt werden, da der Luftstrom nicht ausreichend stark und ausreichend lange wirkt und Oberflächen, auf denen sich das Kondensat gebildet hat, nicht warm genug sind, als dass eine ausreichende Verdampfung stattfinden würde. Folglich kann es zu einer Korrosion der Muffel oder von Anbauteilen kommen, wenn Kondensat über einen längeren Zeitraum im Gerät verbleibt.

Die grundsätzlich einfachste Möglichkeit, Kondensat zu entfernen, besteht im manuellen Auswischen des Garraums. Das ist zeitaufwändig und bei eingebautem Zubehör oder Anbauteilen (z.B. einem Heizkörper oder einem Einhängegitter) nicht immer problemlos zu bewerkstelligen.

CH 696 039 A5 offenbart einen kombinierten Backofen mit Mikrowelle und Trocknungsfunktion. Dazu ist ein Backofen mit Widerstandsheizung und Mikrowellengenerator ausgestattet. Um beim Erwärmen von Speisen eine Kondensatbildung an den Muffelwänden zu vermeiden, wird während eines Teils des Aufwärmvorgangs die Widerstandsheizung eingeschaltet. Die Widerstandsheizung wird wieder abgeschaltet, wenn die Temperatur im Garraum einen vorgegebenen Schwellwert von z.B. 70°C erreicht. Dies erlaubt es, unangenehme Gerüche oder dergleichen zu vermeiden. Ein Backofen ist mit einem Garraum, einer am Garraum angeordneten Widerstandsheizung zum Heizen des Garraums, einem Mikrowellengenerator zum Erwärmen von Speisen im Garraum und einer Steuerung zum Steuern der Widerstandsheizung und des Mikrowellengenerators ausgestattet, wobei die Steuerung mindestens ein vom Benutzer aktivierbares Mikrowellenprogramm aufweist, welches den Mikrowellengenerator aktiviert, wobei die Steuerung derart ausgestaltet ist, dass das Mikrowellenprogramm für eine Trocknung des Garraums die Widerstandsheizung zum Aufheizen des Garraums auf höchstens 100°C aktiviert. Der Backofen kann einen Temperatursensor im oder beim Garraum aufweisen und die Steuerung derart ausgestaltet sein, dass das Mikrowellenprogramm die Widerstandsheizung nur so lange betreibt, bis der Temperatursensor eine Solltemperatur erreicht hat. Es ist eine Variante, dass die Steuerung derart ausgestaltet ist, dass das Mikrowellenprogramm in einem ersten Schritt den Mikrowellengenerator aktiviert und nach einer vorgegebenen Zeit zusätzlich die Widerstandsheizung aktiviert. Es ist noch eine Variante, dass die vorgegebene Zeit mindestens 30 Sekunden, insbesondere ca. zwei Minuten beträgt. Es ist noch eine Variante, dass er Auswahlmittel zum Auswählen einer Betriebsleistung des Mikrowellengenerators aufweist und dass die Steuerung derart ausgestaltet ist, dass das Mikrowellenprogramm die Widerstandsheizung nur aktiviert, wenn eine Betriebsleistung oberhalb einer Schwellleistung ausgewählt ist, wobei die Schwellleistung grösser Null, insbesondere größer 300 Watt, vorzugsweise ca. 450 Watt ist. Es ist noch eine Variante, dass er einen Ventilator zum Umwälzen von Luft im Garraum aufweist, wobei die Steuerung derart ausgestaltet ist, dass das Mikrowellenprogramm den Ventilator mindestens während eines Teils einer Programmlaufzeit des Mikrowellenprogramms in Betrieb setzt. Es ist noch eine Variante, dass die Steuerung derart ausgestaltet ist, dass das Mikrowellenprogramm den Ventilator abschaltet, bevor es den Mikrowellengenerator abschaltet. Es ist noch eine Variante, dass die Steuerung derart ausgestaltet ist, dass das Mikrowellenprogramm den Ventilator abschaltet, wenn eine Garraumtemperatur einen vorgegebenen Wert, insbesondere ca. 70°C, übersteigt. Es ist noch eine Variante, dass die Steuerung derart ausgestaltet ist, dass das Mikrowellenprogramm für die Trocknung des Garraums die Widerstandsheizung zum Aufheizen des Garraums auf eine Solltemperatur zwischen 60°C bis 80°C, insbesondere ca. 70°C, aktiviert. Es ist noch eine Variante, dass die Steuerung derart ausgestaltet ist, dass das Mikrowellenprogramm die Widerstandsheizung nach Erreichen der Solltemperatur bis zum Programmablauf abschaltet.

DE 38 04 678 A1 offenbart ein Verfahren zum Betreiben eines Backofens mit Mikrowellen und elektrischer Widerstandsheizung. bei dem ein Wrasenabzugskanal mit einem Wrasenabsauggebläse vorgesehen ist. Über im Wrasenabzugskanal angeordnete Sensoren für die Feuchte und die Temperatur des Wrasens wird die Drehzahl des Wrasenabsauggebläses variiert.

EP 0 567 813 A2 offenbart eine Anordnung zur Feuchtemessung in lüftergestützten Lebensmittelgaröfen, mit einem Garraum, einem weiteren Raum, in dem ein Kühlgebläse untergebracht ist und der durch eine Trennwand von dem Garraum getrennt ist. Die Anordnung umfasst einen Körper aus gut wärmeleitendem Metall, der durch die Trennwand verläuft und dessen Enden in den Garraum und den abgetrennten weiteren Raum eingebracht sind. Die Anordnung umfasst ferner eine Wärmesenke, die mit dem Ende des Metallkörpers verbunden ist, und drei Temperatursensoren, die zum Messen der Temperaturen der beiden Enden bzw. des Garraums geeignet sind. Diese Sensoren sind mit einer Mikroprozessoreinrichtung verbunden, um ihr Informationen bezüglich der von ihnen gemessenen Temperaturen zu liefern, damit die Mikroprozessoreinrichtung den Feuchtigkeitsgehalt der Luft im Ofen beim Erreichen einer Dampfkondensationstemperatur am Ende des Metallkörpers berechnen kann.

DE 103 38 138 A1 offenbart eine Einrichtung zur Steuerung von Elektrogeräten, vorzugsweise Elektrohausgeräten, wie z.B. Trocknern, Waschmaschinen, Geschirrspüler, Backofen, Kochfelder, mit einer elektrischen/elektronischen Regeleinrichtung, mindestens einem Bedien- und Anzeigeeinrichtung und wenigstens einer Sensoreinrichtung zur Erfassung von Betriebszuständen des Elektrogeräts, wobei die Signalübertragung zwischen der elektronischen Regeleinrichtung, dem Bedien- und Anzeigeneinrichtung sowie der wenigstens einen Sensoreinrichtung auf optischem Wege erfolgt.

DE 102 13 014 A1 offenbart eine Vorrichtung zur Überwachung des Verstopfungsgrades, insbesondere Verkalkungsgrades, zumindest einer Düse, insbesondere Beschwadungsdüse, in einem Raum, insbesondere Garraum eines Gargerätes, mit zumindest einem Sensor zum Erfassen zumindest einer Zustandsgröße, insbesondere eines Temperaturwertes und/oder Feuchtewertes, im Raum, einer Erfassungs- und Auswerteeinheit in Wirkverbindung mit dem Sensor zur Bestimmung des Verstopfungsgrades und einer Anzeigeeinheit in Wirkverbindung mit der Erfassungs- und Auswerteeinheit zum Anzeigen des bestimmten Verstopfungsgrades sowie ein Verfahren zur Überwachung des Verstopfungsgrades, insbesondere Verkalkungsgrades, zumindest einer Düse, insbesondere Beschwadungsdüse, in einem Raum, insbesondere Garraum eines Gargerätes, wobei zumindest ein Temperaturwert und/oder Feuchtewert im Raum erfasst und zur Bestimmung des Verstopfungsgrades herangezogen wird, und der bestimmte Verstopfungsgrad angezeigt wird.

Es ist die Aufgabe der vorliegenden Erfindung, die Nachteile des Standes der Technik zumindest teilweise zu überwinden und insbesondere eine Möglichkeit bereitzustellen, eine Kondensation in einem Garraum nach einem Garablauf auf eine besonders nutzerfreundliche Weise durchzuführen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zum Entfeuchten eines Garraums eines Haushaltsgargeräts, wobei eine Kondensatbildung in einem Garraum des Haushaltsgargeräts ermittelt wird, mit Erkennen der Kondensatbildung in einer Anzeigeeinrichtung eine mit einem Entfeuchtungsablauf zusammenhängende Entfeuchtungsnachricht angezeigt wird, mit dem Anzeigen der Entfeuchtungsnachricht auf eine Nutzerhandlung gewartet wird und anhängig von der Nutzerhandlung der Entfeuchtungsablauf wahlweise durchgeführt oder beendet wird.

Dieses Verfahren weist den Vorteil auf, dass der Entfeuchtungsablauf (auch als "Trocknungsablauf" bezeichenbar) bzw. eine Entfeuchtungsfunktion nur im Bedarfsfall aktiv wird. Dadurch werden eine Einsatzhäufigkeit und ein Stromverbrauch verringert sowie eine Nutzerwahrnehmung verbessert. Der Benutzer wird durch das Haushaltsgargerät aktiv über diese Betriebsart ("Entfeuchtungsbetriebsart") informiert und erfährt - im Vergleich zu einer rein nutzerseitig veranlassten Entfeuchtung - deutlicher und bewusster den Komfort einer automatischen angebotenen Entfeuchtung oder Trocknung. Bei diesem Verfahren kann ein Nutzer zudem - im Gegensatz zu einem nur vollautomatisch durch das Gerät gesteuerten Entfeuchten - das Durchführen des Entfeuchtungsablaufs beeinflussen, z.B. ob dieser überhaupt durchgeführt werden soll oder nicht. Dennoch bietet das Haushaltsgargerät dem Nutzer das Entfeuchten zu einem geeigneten Zeitpunkt an, so dass der Nutzer nicht selbsttätig an das Auslösen einer Entfeuchtung zu denken braucht und dazu auch nicht aufwändig einen entsprechenden Programmpunkt in einer Bedienerführung des Haushaltsgargeräts zu suchen braucht.

Das Entfeuchten kann allgemein auch als Trocknen bezeichnet werden. Die Kondensatbildung kann auch als Betauung, Beschlag oder Niederschlag bezeichnet werden.

Das Haushaltsgargerät kann ein Backofen, ein Mikrowellengerät, ein Dampfbehandlungsgerät oder eine beliebige Kombination daraus sein. Das Haushaltsgargerät kann ein Niedertemperaturgerät sein, wobei eine maximal in dem Garraum erreichbare Garraumtemperatur z.B. 150°C nicht überschreitet. Das Haushaltsgargerät kann insbesondere ein Mikrowellengerät sein, das zusätzlich mindestens eine elektrische Widerstandsheizung aufweist, um den Garraum zu heizen. Ein solches Mikrowellengerät ist insbesondere ein Niedertemperaturgerät. Das Haushaltsgargerät kann aber auch ein Backofen mit einer Mikrowellenfunktionalität sein.

Unter einer Kondensatbildung kann insbesondere eine Ausbildung von kondensiertem Wasser (z.B. in Tropfenform) an einer Oberfläche einer Wandung des Garraums (z.B. an einer Seitenwand oder an einer Decke) und/oder an einem Anbauteil verstanden werden. Das Ermitteln der Kondensatbildung kann ein Messen oder ein Abschätzen der Kondensatbildung umfassen oder sein. Das Ermitteln der Kondensatbildung kann ein quantitatives Ermitteln einer Kondensatmenge (z.B. eines Bedeckungsgrads des Kondensats auf einer vorgegebenen Oberfläche) oder ein qualitatives Ermitteln der Kondensatbildung (z.B. Bildung / Nicht-Bildung einer praktisch merklichen Kondensatmenge) umfassen. Insbesondere bei einer quantitativen Bestimmung der Kondensatbildung kann das Erkennen der Kondensatbildung ein Erkennen eines vorgegebenen Mindestmaßes bzw. Menge an Kondensat umfassen.

Es ist eine Weiterbildung, dass das Ermitteln des vorgegebenen Mindestmaßes ein Erkennen umfasst, ob eine ermittelte Kondensatmenge einen vorgegeben Schwellwert erreicht oder überschritt hat.

Die Anzeigeeinrichtung kann eine alphanumerische Anzeigeeinrichtung sein, die einem Nutzer z.B. einen Klartext o.ä. anzeigt. Die Anzeigeeinrichtung kann eine Segmentanzeige oder einen Bildschirm aufweisen, z.B. einen LCD-Bildschirm. Der Bildschirm kann ein berührungsempfindlicher Bildschirm ("Touchscreen") sein. Die Anzeigeeinrichtung kann in eine Bedienblende integriert sein.

Dass mit Erkennen der Kondensatbildung die Entfeuchtungsnachricht in der Anzeigeeinrichtung angezeigt wird, kann umfassen, dass die Entfeuchtungsnachricht in der Anzeigeeinrichtung nach dem Erkennen der Kondensatbildung angezeigt wird. Das Erkennen der Kondensatbildung umfasst insbesondere ein positives Erkennen (Vorliegen einer Kondensatbildung).

Dass mit dem Anzeigen der Entfeuchtungsnachricht auf eine Nutzerhandlung gewartet wird, kann umfassen, dass das Anzeigen und das Warten zumindest teilweise gleichzeitig erfolgen.

Es ist eine Ausgestaltung, dass die Nutzerhandlung eine Betätigung eines Bedienelements des Haushaltsgargeräts umfasst. Beispielsweise kann der Nutzer eine Taste betätigen oder ein berührungsempfindliches Feld eines Touchscreens berühren. Dies ergibt den Vorteil, dass eine unbeabsichtigte Nutzerhandlung praktisch ausgeschlossen werden kann.

Es ist noch eine Ausgestaltung, dass die Nutzerhandlung ein Öffnen und/oder Schließen einer Garraumtür des Haushaltsgargeräts umfasst, insbesondere ein Öffnen und Schließen der Garraumtür. Dies ergibt den Vorteil, dass zusammen mit der Nutzerhandlung auch ein Luftaustausch des Garraums mit seiner Umgebung stattfinden kann, was eine Entfeuchtung unterstützt. Zudem braucht der Nutzer nicht noch aufwändig ein Bedienelement zu betätigen. Dabei wird davon ausgegangen, dass der Nutzer das Gargut nach dem Öffnen der Garraumtür entnommen hat. Dies kann als eine Voraussetzung dafür angesehen werden, dass die Trocknungsfunktion gestartet wird (Gargut soll sich während Trocknungsfunktion vorteilhafterweise nicht mehr im Gerät befinden und dadurch ausgetrocknet werden). Nach dem Schließen ist keine Interaktion am Bedienelement seitens des Nutzers mehr nötig.

Es ist eine weitere Ausgestaltung, dass die Kondensatbildung optisch ermittelt wird. Dazu kann eine optische Sensoreinrichtung verwendet werden, mittels der z.B. eine vorgegebene, dem Garraum ausgesetzte Messfläche (z.B. ein vorgegebener Bereich der Garraumwandung) auf ein Vorliegen von Kondensat bzw. einer Betauung optisch untersucht wird. Mittels der optischen Sensoreinrichtung kann z.B. eine Helligkeit oder eine Helligkeitsverteilung der Messfläche gemessen werden. Die optische Sensoreinrichtung kann einen optischen Sensor aufweisen, z.B. einen Helligkeitssensor oder einen Bildsensor wie einen CMOS-Sensor oder CCD-Sensor. Die optische Sensoreinrichtung kann eine Lichtquelle zur Beleuchtung der Messfläche aufweisen, z.B. eine LED. Die optische Sensoreinrichtung kann eine Auswerteeinrichtung aufweisen, die mit dem optischen Sensor gekoppelt ist, z.B. eine Bildauswerteeinrichtung. Dies kann auch als eine "direkte" Messung bezeichnet werden. Die Kondensatbildung kann bei dieser Ausgestaltung quantitativ (z.B. über einen Bedeckungsgrad) oder qualitativ bestimmt werden (z.B. als ein Vorliegen oder Nicht-Vorliegen einer Kondensatbildung).

Es ist noch eine weitere Ausgestaltung, dass die Kondensatbildung mittels eines Niederschlagens von Feuchtigkeit auf einem Sensorfeld eines Feuchtigkeitssensors ermittelt wird. Dadurch kann eine - quantitative und/oder qualitative - Bestimmung der Kondensatbildung besonders zuverlässig bestimmt werden, insbesondere unbeeinflusst von einer Beladung oder Ausstattung des Garraums. Zudem ist ein solcher Aufbau besonders kompakt umsetzbar.

Es ist eine Weiterbildung, dass die Kondensatbildung - quantitativ oder qualitativ - mittels einer Luftfeuchtemessung im Garraum ermittelt wird. Alternativ oder zusätzlich kann die Kondensatbildung mittels einer Dämpfung von Mikrowellenstrahlen oder Ultraschallwellen ermittelt werden. Alternativ oder zusätzlich kann die Kondensatbildung mittels einer Messung einer Resonanzfrequenz der Muffel bei Mikrowellen- oder Ultraschallanregung ermittelt werden. Solche Messungen können auch als "indirekte" Messungen bezeichnet werden.

Es ist ferner eine Ausgestaltung, dass die Kondensatbildung beruhend auf einer Garraumtemperatur ermittelt wird, insbesondere abgeschätzt wird. Dies weist den Vorteil auf, dass dazu ein ggf. bereits vorhandener Temperatursensor verwendet werden kann. Auch wird eine Vorhersagegenauigkeit zum Vorliegen einer Kondensatbildung erhöht.

Es ist eine alternative oder zusätzliche Ausgestaltung, dass die Kondensatbildung beruhend auf einer Betriebsdauer eines vorangegangenen Garablaufs ermittelt wird, insbesondere abgeschätzt wird. Dies erhöht ebenfalls eine Vorhersagegenauigkeit.

Es ist noch eine alternative oder zusätzliche Ausgestaltung, dass die Kondensatbildung beruhend auf einer Betriebsart eines vorangegangenen Garablaufs ermittelt wird, insbesondere abgeschätzt wird. Auch dies kann eine Vorhersagegenauigkeit erhöhen.

Insbesondere ist es eine Ausgestaltung, dass die Kondensatbildung beruhend darauf ermittelt wird, ob die Betriebsart eine Mikrowellenbetriebsart ist. Denn bei der Mikrowellenbetriebsart wird Gargut nur vergleichsweise kurz bestrahlt und die Muffel durch Mikrowellenstrahlung nicht aufgewärmt. Daher kann es zu einem hohen Dampfeintrag aus dem Gargut in den Garraum kommen, welcher Dampf stark an der kalten Muffel kondensieren kann. Eine Dauer eines Mikrowellenbetriebs ist häufig zu kurz, um eine zur Vermeidung einer Kondensatbildung ausreichende Erwärmung der Muffel durch Wärmeübertrag zu bewirken.

Beispielsweise kann (allgemein oder auch nur für den Fall eines unklaren Sensorsignals) anhand der vorausgegangenen Betriebsart und der gemessenen Garraumtemperatur abgeschätzt werden, ob sich wahrscheinlich Kondensat in praktisch wesentlicher Menge gebildet hat und ob der Einsatz der Trocknungsfunktion notwendig oder sinnvoll ist. So ist es eine Weiterbildung, dass bei Garraumtemperaturen von über 100°C ein nachfolgender Einsatz der Entfeuchtungsfunktion in der Regel nicht notwendig ist, da bei diesen Oberflächentemperaturen ein verminderter Feuchtigkeitsniederschlag auftritt. Gleiches gilt für länger dauernde Garvorgänge bei erhöhten Temperaturen, bei denen zwar sehr viel Feuchtigkeit entstehen kann, diese aber auch nach Betriebsende während einer dann entsprechend langen Auskühlphase immer noch vollständig durch die Gerätelüftung abgeführt werden kann. Eine Möglichkeit zur Ermittlung des Vorliegens einer Kondensatbildung bzw. einer der sinnvollen Aktivierung der Entfeuchtungsfunktion stellt daher die Messung der Garraumtemperatur unter Einbeziehung der vorausgegangenen Betriebsart dar. Insbesondere stellt zum Beispiel ein vorausgegangener, typischerweise kurzer, Mikrowellenbetrieb bei ansonsten niedrigen (< 100°C) Garraumtemperaturen einen Fall dar, bei dem die Trocknungsfunktion mit hoher Wahrscheinlichkeit sinnvoll ist.

Es ist außerdem eine Ausgestaltung, dass während des Entfeuchtungsablaufs der Garraum erwärmt und/oder entlüftet wird. Durch die Entlüftung, beispielsweise mittels einer Wrasenabzugsvorrichtung, kann der Garraum mit trockenerer Umgebungsluft gefüllt werden, wodurch auch kondensiertes Wasser wieder in die Luft übergeht. Durch die Erwärmung kann das kondensierte Wasser direkt verdampft werden und/oder durch Erwärmung der Muffel verdampft werden. Beides unterstützt eine Entfeuchtung oder Trocknung der Muffel.

Es ist auch eine Ausgestaltung, dass während des Entfeuchtungsablaufs der Garraum mittels Abgabe von Wärmestrahlung von einer elektrisch betriebenen Heizeinrichtung erwärmt wird. Dies ermöglicht einen preiswerten, langlebigen und kompakten Aufbau. Die elektrisch betriebene Heizeinrichtung kann ein oder mehrere elektrische Widerstandsheizelemente aufweisen. Die elektrischen Widerstandsheizelemente können fest ein gebaut sein (z.B. als Unterhitzeheizkörper, als Oberhitzeheizkörper und/oder als Ring- bzw. Umluftheizkörper) oder als ein Einschubteil vorliegen. Es ist eine Weiterbildung, dass die Heizeinrichtung auch zum Garen von Gargut verwendet werden kann. Dies kann zusammen mit und/oder unabhängig von der Verwendung einer Mikrowelleneinrichtung geschehen. Die Leistung der Heizeinrichtung kann so bemessen sein, dass sie nur für einen Niedertemperaturbetrieb ausgelegt ist. Alternativ kann die Leistung der Heizeinrichtung so bemessen sein, dass sie den Garraum auch auf höhere Garraumtemperaturen (z.B. von 100°C oder mehr, insbesondere von bis 150°C oder mehr) aufheizen kann.

Es ist eine Weiterbildung, dass während des Entfeuchtungsablaufs eine Temperatur von großen und leicht berührbaren Flächen der Muffel (z.B. des Bodens und der Seitenwände) und/oder einer Türinnenseite nicht so heiß werden kann, dass eine Verbrennungsgefahr für den Nutzer besteht.

Mikrowellen- und Niedertemperaturgargeräte können so ausgelegt sein, dass die Garraumtemperatur auch während des Entfeuchtungsablaufs nicht über eine Einsatzgrenztemperatur von Kunststoffgeschirr hinausgeht. Damit ist sichergestellt, dass im Garraum zurückgelassenes Kunststoffgeschirr während des Entfeuchtungsablaufs nicht zerstört wird oder in Brand gerät.

Niedrige Garraumtemperaturen nach dem Entfeuchtungsablauf können auch vorteilhaft sein, damit anschließend eine Wartezeit nicht zu lang wird, bis die Garraumtemperatur unter einen für spezielle Funktionen notwendigen Maximalwert gesunken ist. Zum Niedrigtemperaturgaren oder "Sanftgaren" kann ein solcher Maximalwert z.B. 40°C betragen.

Es ist noch eine Weiterbildung, dass während des Entfeuchtungsablaufs ein Umluftgebläse eingeschaltet ist, um vorteilhafterweise durch die Luftumwälzung auch sicher alle Bereiche des Garraums und der Muffel erwärmen zu können.

Es ist auch noch eine Weiterbildung, dass während des Entfeuchtungsablaufs eine Mikrowelleneinrichtung ("Mikrowellenheizung") eingeschaltet ist oder arbeitet, um eine Erwärmung weiter zu unterstützen.

Es ist zudem noch eine Ausgestaltung, dass der Entfeuchtungsablauf bei Fehlen einer innerhalb einer vorgegebenen Zeitdauer empfangenen Nutzerhandlung automatisch durchgeführt wird. Dadurch kann eine Entfeuchtung auch durchgeführt werden, wenn der Nutzer, beispielsweise aufgrund seiner Abwesenheit, nicht auf die Entfeuchtungsnachricht reagiert. Diese Ausgestaltung kann von einer ersten Bedingung abhängig sein, beispielsweise davon, ob das Haushaltsgargerät nach einem Garablauf bereits (weiterhin stromführend) ausgeschaltet oder in einen Standby-Zustand überführt worden war.

Es ist auch eine alternative oder zusätzliche Ausgestaltung, dass der Entfeuchtungsablauf bei Fehlen einer innerhalb einer vorgegebenen Zeitdauer empfangenen Nutzerhandlung automatisch beendet wird, insbesondere erst gar nicht begonnen wird. Diese Ausgestaltung weist den Vorteil auf, dass ein automatisches Durchführen des Entfeuchtungsablaufs mit dem damit verbundenen Energieverbrauch und der damit verbundenen Geräuschentwicklung sicher verhindert werden kann. Diese Ausgestaltung kann von einer zweiten Bedingung abhängig sein, beispielsweise davon, ob das Haushaltsgargerät nach einem Garablauf noch angeschaltet ist.

Es ist eine Weiterbildung, dass die Dauer des Entfeuchtungsablaufs so gewählt ist, dass das Kondensat vollständig abgetrocknet ist. Die vollständige Abtrocknung kann sensorisch ermittelt werden. Fehlt eine solche Sensorik, kann für das jeweilige Haushaltsgargerät eine empirisch ermittelte Betriebsdauer vorgegeben werden.

Die Aufgabe wird auch gelöst durch ein Haushaltsgargerät, das zur Durchführung des Verfahrens eingerichtet ist. Das Haushaltsgargerät kann analog zu dem Verfahren weitergebildet werden und weist die gleichen Vorteile auf.

Es ist eine Ausgestaltung, dass das Haushaltsgargerät einen Garraum, eine Mikrowelleneinrichtung zum Beaufschlagen des Garraums mit Mikrowellen, mindestens eine Widerstandsheizung zur Abgabe von Wärmestrahlung in den Garraum und eine Anzeigeeinrichtung zum Anzeigen von Information aufweist, wobei das Haushaltsgargerät dazu eingerichtet ist, eine Kondensatbildung in dem Garraum zu ermitteln und bei (positiver) Ermittlung einer Kondensatbildung einen Entfeuchtungsablauf zu starten, und wobei das Haushaltsgargerät ferner dazu eingerichtet ist, vor dem Starten des Entfeuchtungsablaufs in einer Anzeigeeinrichtung eine mit einem Entfeuchtungsablauf zusammenhängende Nachricht ("Entfeuchtungsnachricht") anzuzeigen, mit dem Anzeigen der Entfeuchtungsnachricht auf eine Nutzerhandlung zu warten und anhängig von der Nutzerhandlung den Trocknungsvorgang wahlweise durchzuführen oder zu beenden (insbesondere gar nicht erst zu starten).

Das Haushaltsgargerät kann eine Steuereinrichtung aufweisen, die mit der Mikrowelleneinrichtung und der mindestens einen Widerstandsheizung verbunden ist und diese betreiben kann. Insbesondere kann die Steuereinrichtung dann zur Durchführung des Verfahrens eingerichtet sein, z.B. mittels einer entsprechenden hardwaretechnischen oder softwaretechnischen Ausgestaltung. Die Steuereinrichtung kann mit mindestens einem Sensor verbunden sein. Die Steuereinrichtung kann als Auswerteeinrichtung zum Auswerten von Messwerten des Sensors und/oder zum Erkennen der Kondensatbildung ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt ein zum Durchführen des Verfahrens eingerichtetes Haushaltsgargerät;
- Fig.2: zeigt einen ersten Abschnitt eines Ablaufdiagramms zum Durchführen des Verfahrens; und
- Fig.3: zeigt einen zweiten Abschnitt eines Ablaufdiagramms zum Durchführen des Verfahrens.

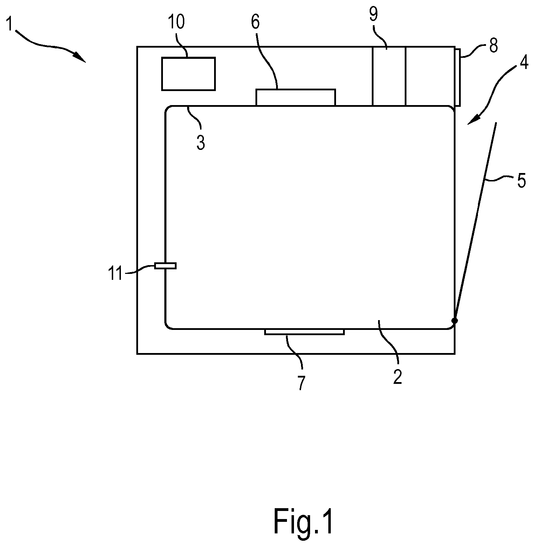

Fig.1 zeigt ein zum Durchführen des Verfahrens eingerichtetes Haushaltsgargerät 1 in Form eines Backofen-/Mikrowellen-Kombinationsgeräts. Das Haushaltsgargerät 1 weist dazu einen Garraum 2 auf, der mittels einer Muffel 3 begrenzt wird. Der Garraum 2 bzw. die Muffel 3 weisen eine frontseitige Beschickungsöffnung 4 auf, die mittels einer Tür 5 verschließbar ist. Die Tür 5 ist hier horizontal verschwenkbar gezeigt, kann aber auch vertikal verschwenkbar sein. Das Haushaltsgargerät 1 weist ferner eine Mikrowelleneinrichtung 6 zum Beaufschlagen des Garraums 2 mit Mikrowellen sowie mindestens eine Widerstandsheizung 7 zur Abgabe von Wärmestrahlung in den Garraum 2 auf. Die Widerstandsheizung 7 kann einen Unterhitzeheizkörper, einen Oberhitzeheizkörper und/oder einen Ringheizkörper aufweisen. Das Haushaltsgargerät 1 kann ein z.B. in der Nähe des Ringheizkörpers befindliches Umluftgebläse (o. Abb.) aufweisen, um eine Luftumwälzung in dem Garraum zu ermöglichen, z.B. zur Bereitstellung einer Heißluftfunktion. Das Haushaltsgargerät 1 weist zudem eine Anzeigeeinrichtung 8 zum Anzeigen von Information auf, z.B. einen Touchscreen im Bereich einer Frontblende. Das Haushaltsgargerät 1 weist außerdem eine Wrasenabzugseinrichtung 9 zum Entlüften des Garraums 2 auf. Das Haushaltsgargerät 1 weist darüber hinaus eine Steuereinrichtung 10 zum Steuern der Mikrowelleneinrichtung 6, der Widerstandsheizung 7 und der Wrasenabzugseinrichtung 9 auf. Die Steuereinrichtung 10 kann über die Anzeigeeinrichtung 8 Nutzereingaben erhalten. Die Steuereinrichtung 10 ist ferner mit mindestens einem Sensor 11 verbunden, z.B. mit einem Temperatursensor zum Messen einer Garraumtemperatur.

Das Haushaltsgargerät 1, insbesondere dessen Steuereinrichtung 10, ist dazu eingerichtet, eine Kondensatbildung in dem Garraum 2 zu ermitteln und bei positiver Ermittlung oder Feststellung einer Kondensatbildung einen Entfeuchtungsablauf zu starten.

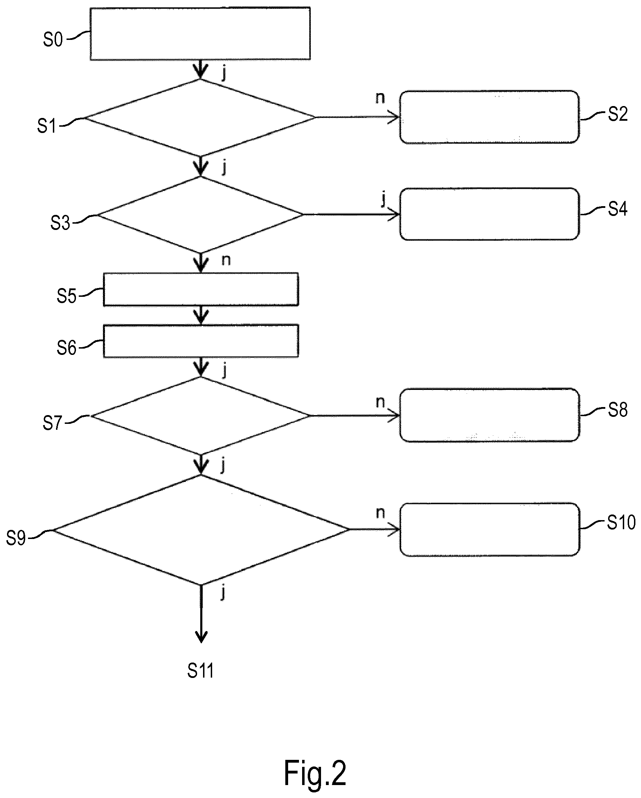

Fig.2 zeigt einen ersten Abschnitt eines Ablaufdiagramms zum Durchführen eines möglichen Verfahrens zum Entfeuchten oder Trocknen des Garraums 2 des Haushaltsgargeräts 1.

In einem Schritt S0 hat ein Nutzer einen Mikrowellen-Garbetrieb zum Garen eines in dem Garraum 2 befindlichen Garguts (o. Abb.) unter Aktivierung der Mikrowelleneinrichtung 6 durchgeführt. Die Widerstandsheizung 7 war dabei beispielhaft ausgeschaltet.

In einem auf eine Beendigung des Mikrowellen-Garbetriebs folgenden ersten Schritt S1 des Verfahrens wird durch die Steuereinrichtung 10 geprüft, ob eine Betriebsdauer des Mikrowellen-Garbetrieb aus S0 einen vorgegebenen Wert, hier z.B. von einer Minute, erreicht oder überschritten hat.

Falls nicht ("n"), wird kein Entfeuchtungsablauf durchgeführt, sondern das Haushaltsgargerät 1 in einem Schritt S2 in einen Zustand überführt, bei dem keine Entfeuchtungsfunktion durchgeführt wird. Beispielsweise kann das Haushaltsgargerät 1 in Schritt S2 bei abgelaufenem Timer ein beliebiges Auswahlmenü anzeigen, bei einem Drücken einer Ein/Aus-Taste in einen Standby-Zustand geschaltet werden usw.

Falls ja ("j"), wird in einem Schritt S3 geprüft, ob eine durch den mindestens einen Sensor 11 abgefühlte Garraumtemperatur einen vorgegebenen Wert, z.B. von 80°C, erreicht oder überschritten hat.

Falls ja ("j"), wird kein Entfeuchtungsablauf durchgeführt, sondern das Haushaltsgargerät 1 in einem Schritt S4 in einen Zustand überführt, bei dem keine Entfeuchtungsfunktion durchgeführt wird. Beispielsweise kann das Haushaltsgargerät 1 bei einem Drücken einer Ein/Aus-Taste in einen Standby-Zustand geschaltet werden usw.

Falls nicht ("n"), wird in einem Schritt S5 ein Lüfternachlauf gestartet.

In einem Schritt S6 wird erkannt, dass ein Nutzer die Tür 5 öffnet, beispielsweise um das gegarte Gargut aus dem Garraum 2 zu entnehmen.

In einem folgenden Schritt S7 wird geprüft, ob die Tür 5 innerhalb einer vorbestimmten Zeitdauer, z.B. von zwei Minuten, wieder geschlossen wurde.

Falls nicht ("n"), wird kein Entfeuchtungsablauf durchgeführt, sondern das Haushaltsgargerät 1 in einem Schritt S8 beispielsweise in einen Standby-Zustand überführt werden. Dabei wird ausgenutzt, dass der Garraum 2 bei geöffneter Tür 5 auch ohne einen dedizierten Entfeuchtungsablauf austrocknen kann.

Falls doch ("j"), wird in einem Schritt S9 geprüft, ob ein Türöffnungs- und Türschließungsvorgang 5 innerhalb einer weiteren vorbestimmten Zeitdauer, z.B. von sechs Minuten, nach Beendigung von Schritt S0 durchgeführt wurde. Dadurch wird geprüft, ob der Nutzer das Gargut entnommen hat, bevor die Entfeuchtungsfunktion startet. Das Entnehmen kann nur dann stattgefunden haben, wenn die Türe geöffnet und geschlossen wurde. Die Zeitdauer von sechs Minuten wurde mit dem Hintergrund gewählt, dass sich der Nutzer gestört fühlen könnte, wenn Haushaltsgargerät 1 nach einer längeren Dauer als sechs Minuten einen Entfeuchtungsablauf durchführen möchte.

Falls nicht ("n"), wird kein Entfeuchtungsablauf durchgeführt, sondern das Haushaltsgargerät 1 in einem Schritt S10 beispielsweise in einen Standby-Zustand überführt.

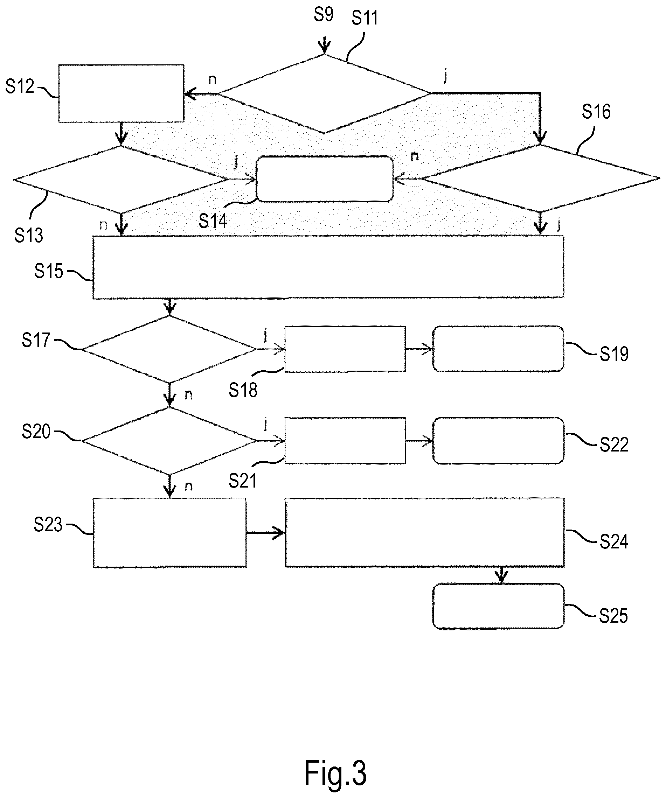

Falls doch ("j"), wird das Verfahren mit einem in Fig.3 gezeigten Schritt S11 fortgeführt.

Fig.3 zeigt einen zweiten Abschnitt des Ablaufdiagramms zum Durchführen des Verfahrens.

In Schritt S11 wird geprüft, ob das Haushaltsgargerät 1 durch den Nutzer, z.B. mittels Drückens einer Ein/Aus-Taste, bereits in einen Standby-Zustand überführt worden ist. Mit dem Standby-Zustand bleibt das Haushaltsgargerät 1 mit einer Stromversorgung verbunden, und die Steuereinrichtung 10 kann die Mikrowelleneinrichtung 6, die Widerstandsheizung 7 und/oder die Wrasenabzugseinrichtung 9 weiterhin betreiben. Mit Übergang in den Standby-Zustand können beispielsweise die Anzeigeeinrichtung 8 und eine Garraumbeleuchtung (o. Abb.) deaktiviert worden sein, wobei die Steuereinrichtung 10 diese beiden Gerätekomponenten bei Bedarf erneut aktivieren kann. Dabei wird berücksichtigt, dass dann, wenn die Ein/Aus-Taste betätigt worden ist (z.B. zum Beenden eines Mikrowellenbetriebs, evtl. aber auch danach) das Haushaltsgargerät 1 vorteilhafterweise nicht selbstständig einen Heizvorgang startet. Daher ist an dieser Stelle eine Benutzerabfrage vorgesehen.

Falls nicht ("n"), wird in einem Schritt S12 in der Anzeigeeinrichtung 8 eine Entfeuchtungsnachricht angezeigt, welche einen Nutzer auffordert, die Tür 5 zu öffnen, z.B. durch Anzeige des Texts "Zum Trocknen Tür öffnen". Die Anzeige kann für eine vorgegebene Zeitdauer angezeigt werden, beispielsweise für sechs Sekunden. Hierbei wird davon ausgegangen, dass dann, wenn der Nutzer vor dem Haushaltsgargerät 1 steht und Interesse an der Anzeige hat, eine Zeitspanne von wenigen Sekundengenügt. Gleichermaßen ist dies ein Kompromiss, um den Kunden nicht mit hintereinander geschalteten Anzeigen zu überrumpeln, falls dieser an einer Trocknung, nachdem das Gargut "fertig" ist, kein Interesse hat.

In einem folgenden Schritt S13 wird geprüft, ob innerhalb noch einer weiteren Zeitdauer, z.B. von 30 Sekunden ab Anzeige oder ab Erlöschen der Entfeuchtungsnachricht aus Schritt S12, die Tür 5 geöffnet worden ist.

Falls dies der Fall ist ("j"), wird das Haushaltsgargerät 1 in einem Schritt S14 beispielsweise in einen Standby-Zustand überführt. Auch hierbei wird ausgenutzt, dass der Garraum 2 bei geöffneter Tür 5 auch ohne einen dedizierten Entfeuchtungsablauf austrocknen kann.

Falls nicht ("n"), wird in einem Schritt S15 der Entfeuchtungsablauf bzw. die Entfeuchtungsfunktion als solcher / solches gestartet. Der Entfeuchtungsablauf kann unter Aktivierung oder Einschaltung der Mikrowelleneinrichtung 6, der Widerstandsheizung 7, des Umluftgebläses und/oder der Wrasenabzugseinrichtung 9 erfolgen.

Falls in Schritt S11 der Nutzer das Haushaltsgargerät 1 bereits in einen Standby-Zustand überführt hatte ("j"), wird in einem folgenden Schritt S16 in der Anzeigeeinrichtung 8 eine weitere Entfeuchtungsnachricht angezeigt, welche einen Nutzer auffordert, anzugeben, ob der Entfeuchtungsvorgang gestartet werden soll, z.B. durch Anzeige des Texts "Trocknen starten? Ja/Nein". Ein Nutzer kann seine Wahl z.B. über die Anzeigeeinrichtung 8 eingeben. Wird durch das Haushaltsgargerät 1 erkannt, dass der Nutzer eine zustimmende Eingabe getätigt hat ("j"), wird in Schritt S15 der Entfeuchtungsablauf gestartet. Wird durch das Haushaltsgargerät 1 erkannt, dass der Nutzer eine ablehnende Eingabe getätigt hat ("n"), wird das Haushaltsgargerät 1 in einem Schritt S14 beispielsweise in einen Standby-Zustand überführt. Falls keine Nutzereingabe erfolgt, kann das Haushaltsgargerät 1 bzw. die Steuereinrichtung 10, je nach Ausgestaltung, (a) mit Schritt S14 fortfahren, (b) mit Schritt S15 fortfahren oder (c) in dem Abfragestatus bleiben.

Während des Schritts S15 prüft das Haushaltsgargerät 1 bzw. die Steuereinrichtung 10 in einem (Teil-)Schritt S17, ob ein Nutzer die Ein-/Aus-Taste (z.B. eine eigenständige Taste oder ein entsprechendes Tastfeld der Anzeigeeinrichtung 8) betätigt.

Ist dies der Fall ("j"), wird in einem Schritt S18 in der Anzeigeeinrichtung 8 ein Abbrechen des Entfeuchtungsablaufs angezeigt (z.B. durch Anzeige des Texts "Trocknen abgebrochen") und das Haushaltsgargerät 1 unter Abbrechen von Schritt S15 in einem Schritt S19 in einen Standby-Zustand oder Standby-Modus überführt.

Ist dies nicht der Fall ("n"), prüft das Haushaltsgargerät 1 bzw. die Steuereinrichtung 10 in einem (Teil-)Schritt S20, ob ein Nutzer irgendein anderes Bedienelement (z.B. eine eigenständige Taste, ein Drehsteller oder ein entsprechendes Feld der Anzeigeeinrichtung 8) betätigt hat.

Ist dies der Fall ("j"), wird in einem Schritt S21 in der Anzeigeeinrichtung 8 ein Abbrechen des Entfeuchtungsablaufs angezeigt (z.B. durch Anzeige des Texts "Trocknen abgebrochen") und in einem Schritt S22 unter Abbrechen von Schritt S15 in der Anzeigeeinrichtung 8 ein Menü, z.B. ein Hauptmenü, angezeigt.

Ist dies nicht der Fall ("n"), beendet das Haushaltsgargerät 1 bzw. die Steuereinrichtung 10 in einem Schritt S23 den Entfeuchtungsablauf nach einer vorgegebenen Zeitdauer (z.B. von sechs Minuten).

Folgend wird in einem Schritt S24 in der Anzeigeeinrichtung 8 ein Hinweistext angezeigt, z.B. mit der Aufforderung, die Tür 5 für zwei Minuten zu öffnen. Dies kann mit einer Ausgabe eines Hinweistons verbunden sein. Der Hinweistext mag nur für eine vorgegebene Zeitdauer angezeigt werden, beispielsweise für zwei Minuten. Eine Backofenlampe (o. Abb.) kann bei geöffneter Tür 5 immer ausgeschaltet sein.

In einem Schritt S25 wird das Haushaltsgargerät 1 dann in den Standby-Modus überführt.

Bei dem oben beschriebenen Verfahrensablauf wird die Kondensatbildung durch die Schritte S1, S3, S7 und ggf. S9 ermittelt, genauer gesagt: abgeschätzt oder vermutet.

Selbstverständlich ist die vorliegende Erfindung nicht auf das gezeigte Ausführungsbeispiel beschränkt.

So kann die Kondensatbildung zusätzlich oder alternativ zu den Schritten S1, S3, S7 und/oder S9 quantitativ und/oder qualitativ mittels eines Sensors, z.B. des Sensors 11, direkt oder indirekt gemessen werden. Ein solcher Sensor kann ein optischer Sensor usw. sein.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Haushaltsgargerät
- 2: Garraum
- 3: Muffel
- 4: Beschickungsöffnung
- 5: Tür
- 6: Mikrowelleneinrichtung
- 7: Widerstandsheizung
- 8: Anzeigeeinrichtung
- 9: Wrasenabzugseinrichtung
- 10: Steuereinrichtung
- 11: Sensor
- S0-S25: Ablaufschritte

## Patentansprüche

1. Verfahren (S1 - S25) zum Entfeuchten eines Garraums (2) eines Haushaltsgargeräts (1), wobei
- eine Kondensatbildung in einem Garraum des Haushaltsgargeräts (1) ermittelt wird (S1, S3, S7, S9),
- mit Erkennen der Kondensatbildung eine mit einem Entfeuchtungsablauf zusammenhängende Entfeuchtungsnachricht angezeigt wird (S12, S16),
- mit dem Anzeigen der Entfeuchtungsnachricht (S12, S16) auf eine Nutzerhandlung gewartet wird (S13, S16) und
- abhängig von der Nutzerhandlung der Entfeuchtungsablauf wahlweise durchgeführt wird (S15) oder beendet wird (S14).

2. Verfahren (S1 - S25) nach Anspruch 1, wobei die Entfeuchtungsnachricht in einer Anzeigeeinrichtung (8) angezeigt wird.

3. Verfahren (S1 - S25) nach einem der vorhergehenden Ansprüche, wobei die Nutzerhandlung eine Betätigung eines Bedienelements des Haushaltsgargeräts (1) umfasst (S16).

4. Verfahren (S1 - S25) nach einem der vorhergehenden Ansprüche, wobei abhängig von der Nutzerhandlung der Entfeuchtungsablauf wahlweise durchgeführt wird oder nicht durchgeführt wird (S15).

5. Verfahren nach einem der vorhergehenden Ansprüche, wobei die Kondensatbildung optisch ermittelt wird.

6. Verfahren nach einem der vorhergehenden Ansprüche, wobei die Kondensatbildung mittels eines Niederschlagens von Feuchtigkeit auf einem Sensorfeld eines Feuchtigkeitssensors ermittelt wird.

7. Verfahren (S1 - S25) nach einem der vorhergehenden Ansprüche, wobei die Kondensatbildung beruhend auf einer Garraumtemperatur ermittelt wird (S3).

8. Verfahren (S1 - S25) nach einem der vorhergehenden Ansprüche, wobei die Kondensatbildung beruhend auf einer Betriebsdauer eines vorangegangenen Garablaufs (S0) ermittelt wird (S1).

9. Verfahren (S1 - S25) nach einem der vorhergehenden Ansprüche, wobei das Verfahren nach Beendigung eines vorangegangenen Garablaufs (S0) im Rahmen einer Entfeuchtungsbetriebsart durchgeführt wird und die Kondensatbildung beruhend auf einer Betriebsart des vorangegangenen Garablaufs (S0) ermittelt wird.

10. Verfahren (S1 - S25) nach Anspruch 9, wobei die Kondensatbildung beruhend darauf ermittelt wird, ob die Betriebsart eine Mikrowellenbetriebsart ist.

11. Verfahren (S1 - S25) nach einem der vorhergehenden Ansprüche, wobei während des Entfeuchtungsablaufs (S15) der Garraum (2) erwärmt wird.

12. Verfahren (S1 - S25) nach einem der vorhergehenden Ansprüche, wobei während des Entfeuchtungsablaufs (S15) der Garraum (2) entlüftet wird.

13. Verfahren (S1 - S25) nach einem der vorhergehenden Ansprüche, wobei der Entfeuchtungsablauf (S15) bei Fehlen einer innerhalb einer vorgegebenen Zeitdauer empfangenen Nutzerhandlung automatisch durchgeführt wird (S13, S15, S16) und/oder automatisch beendet wird (S13, S14, S16).

14. Haushaltsgargerät (1), aufweisend einen Garraum (2) und eine Anzeigeeinrichtung (8) zum Anzeigen von Information, wobei das Haushaltsgargerät (1) dazu eingerichtet ist,
- eine Kondensatbildung in dem Garraum (2) zu ermitteln (S1, S3, S7, S9) und
- bei Ermittlung einer Kondensatbildung einen Entfeuchtungsablauf (S15) zu starten,
- vor dem Starten des Entfeuchtungsablaufs (S15) in der Anzeigeeinrichtung (8) eine mit einem Entfeuchtungsablauf (S15) zusammenhängende Entfeuchtungsnachricht anzuzeigen (S12, S16), **dadurch gekennzeichnet, dass** das Haushaltsgargerät (1) ferner dazu eingerichtet ist,
- mit dem Anzeigen (S12, S16) der Entfeuchtungsnachricht auf eine Nutzerhandlung (S13, S16) zu warten und
- anhängig von der Nutzerhandlung den Entfeuchtungsablauf (S15) wahlweise durchzuführen oder zu beenden (S14).

15. Haushaltsgargerät (1) nach Anspruch 14, ferner aufweisend eine Mikrowelleneinrichtung (6) zum Beaufschlagen des Garraums (2) mit Mikrowellen und mindestens eine Widerstandsheizung (7) zur Abgabe von Wärmestrahlung in den Garraum (2).

## Claims

1. Method (S1-S25) for dehumidifying a cooking chamber (2) of a household cooking appliance (1), wherein
- condensate formation is determined in a cooking chamber of the household cooking appliance (1) (S1, S3, S7, S9),
- when condensate formation is detected, a dehumidification message associated with a dehumidification process is displayed (S12, S16),
- when the dehumidification message is displayed (S12, S16), a user action is awaited (S13, S16) and
- the dehumidification process is either performed (S15) or terminated (S14) as a function of the user action.

2. Method (S1-S25) according to claim 1, wherein the dehumidification message is displayed in a display facility (8).

3. Method (S1-S25) according to one of the preceding claims, wherein the user action comprises actuation of an operating element of the household cooking appliance (1) (S16).

4. Method (S1-S25) according to one of the preceding claims, wherein the dehumidification process is either performed or not performed (S15) as a function of the user action.

5. Method according to one of the preceding claims, wherein condensate formation is determined optically.

6. Method according to one of the preceding claims, wherein condensate formation is determined by the precipitation of moisture on a sensor field of a humidity sensor.

7. Method (S1-S25) according to one of the preceding claims, wherein condensate formation is determined based on a cooking chamber temperature (S3).

8. Method (S1-S25) according to one of the preceding claims, wherein condensate formation is determined (S1) based on an operating duration of a preceding cooking process (S0).

9. Method (S1-S25) according to one of the preceding claims, wherein after termination of a preceding cooking process (S0) the method is carried out within the scope of a dehumidification operating mode and condensate formation is determined based on an operating mode of a preceding cooking process (S0).

10. Method (S1-S25) according to claim 9, wherein condensate formation is determined based on whether the operating mode is a microwave operating mode.

11. Method (S1-S25) according to one of the preceding claims, wherein the cooking chamber (2) is heated during the dehumidification process (S15).

12. Method (S1-S25) according to one of the preceding claims, wherein the cooking chamber (2) is ventilated during the dehumidification process (S15).

13. Method (S1-S25) according to one of the preceding claims, wherein the dehumidification process (S15) is automatically performed (S13, S15, S16) and/or automatically terminated (S13, S14, S16) if no user action is received within a predefined time period.

14. Household cooking appliance (1), having a cooking chamber (2) and a display facility (8) for displaying information, the household cooking appliance (1) being designed
- to determine (S1, S3, S7, S9) condensate formation in the cooking chamber (2) and
- to start a dehumidification process (S15) when condensate formation is determined,
- to display (S12, S16) a dehumidification message associated with a dehumidification process (S15) in the display facility (8) before the dehumidification process (S15) starts,
**characterised in that** the household cooking appliance (1) is further designed,
- to await a user action (S13, S16) when the dehumidification message is displayed (S12, S16) and
- either to perform or terminate (S14) the dehumidification process (S15) as a function of the user action.

15. Household appliance (1) according to claim 14, further having a microwave facility (6) for applying microwaves to the cooking chamber (2) and at least one resistance heater (7) for emitting heat radiation into the cooking chamber (2).

## Revendications

1. Procédé (S1 - S25) de déshumidification de l'espace de cuisson (2) d'un appareil de cuisson électroménager (1), dans lequel
- la formation d'un condensat dans un espace de cuisson de l'appareil de cuisson électroménager (1) est détectée (S1, S3, S7, S9),
- avec la reconnaissance de la formation d'un condensat un message de déshumidification relative au déroulement d'une déshumidification s'affiche (S12, S16),
- conjointement avec l'affichage du message de déshumidification (S12, S16), une manipulation de l'utilisateur est en attente (S13, S16) et
- en fonction de la manipulation d'utilisateur, le déroulement d'une déshumidification est soit exécutée (S15), soit terminée (S14).

2. Procédé (S1 - S25) selon la revendication 1, dans lequel le message de déshumidification s'indique dans un dispositif d'affichage (8).

3. Procédé (S1 - S25) selon l'une des revendications précédentes, dans lequel la manipulation d'utilisateur comprend (S16) l'actionnement d'un élément de commande de l'appareil de cuisson électroménager (1).

4. Procédé (S1 - S25) selon l'une des revendications précédentes, dans lequel en fonction de la manipulation d'utilisateur, le déroulement d'une déshumidification s'exécute (S15) ou ne s'exécute pas (S15).

5. Procédé selon l'une des revendications précédentes, dans lequel la formation de condensat se détecte visuellement.

6. Procédé selon l'une des revendications précédentes, dans lequel la formation de condensat est détectée au moyen d'une précipitation d'humidité sur le champ sensoriel d'un détecteur d'humidité.

7. Procédé (S1 - S25) selon l'une des revendications précédentes, dans lequel la formation de condensat est détectée (S3) en se basant sur la température d'un espace de cuisson.

8. Procédé (S1 - S25) selon l'une des revendications précédentes, dans lequel la formation de condensat est détectée (S1) en se basant sur une durée de fonctionnement du déroulement d'une cuisson (S0) en cours.

9. Procédé (S1 - S25) selon l'une des revendications précédentes, dans lequel le procédé est exécuté à la fin d'un déroulement de cuisson en cours (S0) dans le cadre d'un type de fonctionnement de déshumidification et la formation de condensat est détectée en se basant sur un type de fonctionnement du déroulement d'une cuisson (S0) en cours.

10. Procédé (S1 - S25) selon la revendication 9, dans lequel la formation de condensat est détectée en ayant identifié que le type de fonctionnement est ou non un type de fonctionnement par micro-ondes.

11. Procédé (S1 - S25) selon l'une des revendications précédentes, dans lequel pendant le déroulement de la déshumidification (S15), l'espace de cuisson (2) est réchauffé.

12. Procédé (S1 - S25) selon l'une des revendications précédentes, dans lequel pendant le déroulement de la déshumidification (S15), l'espace de cuisson (2) est ventilé.

13. Procédé (S1 - S25) selon l'une des revendications précédentes, dans lequel en cas de défaut d'une manipulation d'utilisateur reçue dans un délai prédéfini, le déroulement de la déshumidification (S15) s'exécute automatiquement (S13, S15, S16) et/ou se termine automatiquement (S13, S14, S16).

14. Appareil de cuisson électroménager (1) présentant un espace de cuisson (2) et un dispositif d'affichage (8) pour l'affichage d'informations, dans lequel l'appareil de cuisson électroménager (1) est configuré pour
- détecter (S1, S3, S7, S9) la formation d'un condensat dans l'espace de cuisson (2) et
- en cas de détection d'une formation de condensat, entamer le déroulement d'une déshumidification (S15),
- afficher (S12, S16) avant le début du déroulement d'une déshumidification (S15) dans le dispositif d'affichage (8), un message de déshumidification relatif au déroulement d'une déshumidification (S15), **caractérisé en ce que** l'appareil de cuisson électroménager (1) est de plus configuré pour
- attendre, conjointement avec l'indication (S12, S16) du message de déshumidification, une manipulation de l'utilisateur (S13, S16) et
- soit exécuter, soit mettre fin (S14) au déroulement d'une déshumidification et ce, en fonction de la manipulation d'utilisateur.

15. Appareil de cuisson électroménager (1) selon la revendication 14, comprenant en outre un appareil à micro-ondes (6) pour alimenter l'espace de cuisson (2) en micro-ondes et au moins un chauffage par résistance (7) pour l'apport d'un rayonnement thermique dans l'espace de cuisson (2).
